(19) Europäisches Patentamt
European Patent Office
Office européen des brevets

(11) **EP 2 287 249 B1**

(12) **EUROPEAN PATENT SPECIFICATION**

(45) Date of publication and mention
of the grant of the patent:
**23.07.2014 Bulletin 2014/30**

(21) Application number: **09731122.9**

(22) Date of filing: **07.04.2009**

(51) Int Cl.:
***C08L 33/12*** *(2006.01)*          ***F21S 8/10*** *(2006.01)*

(86) International application number:
**PCT/JP2009/057131**

(87) International publication number:
**WO 2009/125768 (15.10.2009 Gazette 2009/42)**

(54) **METHACRYLIC RESIN COMPOSITION FOR HOT PLATE MELT-BONDING, USE OF THE SAME FOR HOT PLATE MELT-BONDING, AND MELT-BONDING METHOD**

METHACRYLHARZZUSAMMENSETZUNG ZUM HEIZPLATTEN-SCHMELZVERBINDEN, VERWENDUNG DAVON ZUM HEIZPLATTEN-SCHMELZVERBINDEN UND SCHMELZVERBINDUNGSVERFAHREN

COMPOSITION DE RÉSINE MÉTHACRYLIQUE POUR COLLAGE THERMOFUSIBLE DE PLAQUES, SON UTILISATION POUR LE COLLAGE THERMOFUSIBLE DE PLAQUES, ET PROCÉDÉ DE COLLAGE THERMOFUSIBLE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **08.04.2008 JP 2008100246**

(43) Date of publication of application:
**23.02.2011 Bulletin 2011/08**

(73) Proprietor: **Sumitomo Chemical Company, Limited**
**Tokyo 104-8260 (JP)**

(72) Inventors:
• **WAKE, Takao**
**Saijo-shi**
**Ehime 793-0030 (JP)**
• **YAMAZAKI, Kazuhiro**
**Saijo-shi**
**Ehime 793-0030 (JP)**

(74) Representative: **Vossius & Partner**
**Siebertstrasse 4**
**81675 München (DE)**

(56) References cited:
**JP-A- 7 196 882          JP-A- 11 217 412**
**JP-A- 2006 193 647**

EP 2 287 249 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## Technical Field

The present invention relates to a methacrylic resin composition for hot plate welding, to the use thereof for hot plate welding and to a welding method. The methacrylic resin composition is useful as a starting material for vehicle members such as tail lamp covers, headlamp covers and meter panels.

## Background Art

Methacrylic resin compositions have excellent transparency and weather resistance, and are widely known for use as starting materials for vehicle members such as tail lamp covers, headlamp covers and meter panels (for example, see Patent documents 1-9). Such vehicle members are further modified by joining them with housing members made of styrene-based resins such as ABS resin. As methods for joining the members, there are known adhesive-based method, hot plate welding method and vibration welding method (Patent document 10). Hot plate welding method is a method in which the joint sections of each member are heated and melted by close contact with a metal hot plate and then pressure-bonded together, and the method is highly productive because it eliminates the need for coating of an adhesive and the time required for curing of the adhesive.

## Citation List

## Patent Literature

[Patent document 1] JP No. H05-311025A
[Patent document 2] JP No. H05--247311A
[Patent document 3] JP No. H05-279537A
[Patent document 4] JP No. H06-41385A
[Patent document 5] JP No. H06-41386A
[Patent document 6] JP No. H06-184389A
[Patent document 7] JP No. H06-184390A
[Patent document 8] JP No. H06-240093A
[Patent document 9] JP No. H01-294763A
[Patent document 10] JP No. 2005-239823A

## Summary of Invention

## Technical Problem

A high hot plate temperature is preferred in hot plate welding methods since it is desirable to melt the joint sections of each member in a short time from the viewpoint of productivity, and the temperature must be at least about 230°C. However, when certain conventional methacrylic resin compositions are melted on a hot plate that has been heated to the prescribed temperature, and are then removed from the hot plate, a portion of the resin may fail to properly separate from the hot plate, causing it to be stretched out into filaments ("stringing"). The use of such resin compositions as starting materials for the aforementioned vehicle members has sometimes resulted in impaired outer appearance.

It is an object of the present invention to provide a methacrylic resin composition for hot plate welding which is resistant to stringing even with a high hot plate temperature during hot plate welding. It is another object of the invention to provide a use of the methacrylic resin composition for hot plate welding, and a welding method.

## Solution to Problem

As a result of much diligent research in light of the circumstances described above, the present inventors have discovered that a methacrylic resin composition containing a polymer which is a polymer obtained by polymerization of monomers consisting mainly of methyl methacrylate and which has a viscosity-average molecular weight of 150000-250000, is an excellent resin composition for hot plate welding, being resistant to stringing even with a high hot plate temperature when it is used for hot plate welding, and the invention has been completed upon this discovery.

In other words, the present invention provides a methacrylic resin composition for hot plate welding that contains a polymer obtained by polymerization of monomers consisting mainly of methyl methacrylate, the methacrylic resin composition for hot plate welding being characterized in that the viscosity-average molecular weight of the polymer is 150000-250000.

The invention further relates to the use of a methacrylic resin composition for hot plate welding that contains a polymer obtained by polymerization of monomers consisting mainly of methyl methacrylate, the polymer having a viscosity-average molecular weight of 150000-250000.

The invention still further relates to a welding method comprising a step in which at least a portion of a first member, formed from a methacrylic resin composition that contains a polymer obtained by polymerization of monomers consisting mainly of methyl methacrylate, the viscosity-average molecular weight of the polymer being 150000-250000, is contacted with a hot plate and melted, and a step in which the first member is separated from the hot plate and pressure-bonded with a second member.

## Advantageous Effects of Invention

According to the invention it is possible to provide a methacrylic resin composition for hot plate welding which is resistant to stringing even with a high hot plate temperature during hot plate welding.

## Brief Description of Drawings

Fig. 1 is a process drawing for illustration of a welding method according to an embodiment of the invention.
Fig. 2 is a schematic drawing showing a flat plate 1 from above, before cutting.
Fig. 3 is a schematic drawing showing the separate test pieces 2 from above, after cutting of the flat plate 1.
Fig. 4 is a schematic drawing showing an example of a stringiness evaluation test before start of the evaluation test.
Fig. 5 is a schematic drawing showing an example of a stringiness evaluation test where a methacrylic resin composition test piece has a drawn-out string.

## Description of Embodiments

The present invention will now be explained in detail. The methacrylic resin composition for hot plate welding according to the invention is a methacrylic resin composition for hot plate welding that contains a polymer obtained by polymerization of monomers consisting mainly of methyl methacrylate, characterized in that the viscosity-average molecular weight of the polymer is 150000-250000. When the methacrylic resin composition for hot plate welding that contains a polymer having this prescribed viscosity-average molecular weight is used in hot plate welding, even with a high hot plate temperature, it is resistant to "stringing", a phenomenon in which the resin is drawn out into strings when the hot plate and the resin composition are pulled apart, and therefore the resin composition is excellent for use in hot plate welding.

The monomer consisting mainly of methyl methacrylate contains at least 50 wt% methyl methacrylate, with other monomers. The monomers other than methyl methacrylate are not particularly restricted so long as they are monomers that are copolymerizable with methyl methacrylate, and they may be monofunctional monomers having a single radical polymerizable double bond in the molecule, or polyfunctional monomers having two or more radical polymerizable double bonds in the molecule. Acrylic acid esters are preferred among these as monomers other than methyl methacrylate. When an acrylic acid ester is used as a monomer other than methyl methacrylate, preferably the methyl methacrylate is used at 85-100 parts by weight and the acrylic acid ester at 0-15 parts by weight, and more preferably the methyl methacrylate is used at 92-99.9 parts by weight and the acrylic acid ester at 0.1-8 parts by weight.

As examples of acrylic acid esters there may be mentioned methyl acrylate, ethyl acrylate, butyl acrylate, cyclohexyl acrylate, benzyl acrylate, 2-ethylhexyl acrylate and 2-hydroxyethyl acrylate. Of these, methyl acrylate and ethyl acrylate are preferred. One acrylic acid ester may be used alone, or two or more may be used in combination.

The methacrylic resin composition of the invention contains the aforementioned polymer with a viscosity-average molecular weight of 150000-250000. The viscosity-average molecular weight M may be determined by the following formula (1).

$$\ln M = \{\ln[\eta] - \ln(4.8 \times 10^{-5})\}/0.8 \qquad (1)$$

In formula (1), M represents the viscosity-average molecular weight and [η] represents the limiting viscosity The value of [η] can be determined from the viscosity number VN measured according to ISO 1628-6, using the following formula (2).

$$VN = [\eta] + 0.4 \times [\eta]^2 \quad (2)$$

There are no particular restrictions on the process for production of the polymer, and for example, a process may be employed wherein a monomer consisting mainly of prescribed amount of methyl methacrylate is polymerized by a polymerization reaction such as suspension polymerization, solution polymerization or bulk polymerization. The method of controlling the viscosity-average molecular weight of the polymer may be a method known in the prior art, and for example, it may be controlled by adjusting the type and amount of initiator, the type and amount of chain transfer agent, or the polymerization temperature. A common method employed is to raise the viscosity-average molecular weight by reducing the amount of chain transfer agent or to reduce the viscosity-average molecular weight by increasing the amount of chain transfer agent.

From the viewpoint of minimizing stringiness of the obtained methacrylic resin composition, the methacrylic resin composition preferably contains a fatty acid derivative and/or an aliphatic alcohol in addition to the aforementioned polymer. As fatty acid derivatives, there may be mentioned fatty acid amides, fatty acid alkyl esters and fatty acid glycerides, among which fatty acid amides are preferred.

A fatty acid amide is a compound having a structure obtained by dehydrating condensation of usually an approximately C10-22 fatty acid and ammonia or an amino compound. As examples of fatty acid amides there may be mentioned saturated fatty acid amides such as laurylic acid amide, palmitic acid amide, stearic acid amide and behenic acid amide, unsaturated fatty acid amides such as oleic acid amide and linolic acid amide, and amides such as ethylenebislaurylic acid amide, ethylenebispalmitic acid amide and ethylenebisstearic acid amide. Preferred among these are stearic acid amide and ethylenebisstearic acid amide. A fatty acid amide may be used alone, or two or more different ones may be used in combination.

A fatty acid alkyl ester is a compound having a structure obtained by dehydrating condensation of usually an approximately C10--22 fatty acid with an approximately C1-10 monovalent aliphatic alcohol. As examples of fatty acid alkyl esters there may be mentioned saturated fatty acid alkyl esters such as methyl laurylate, ethyl laurylate, butyl laurylate, octyl laurylate, methyl palmitate, ethyl palmitate, butyl palmitate, octyl palmitate, methyl stearate, ethyl stearate, butyl stearate, octyl stearate, methyl behenate, ethyl behenate, butyl behenate and octyl behenate, and unsaturated fatty acid alkyl esters such as methyl oleate, ethyl oleate, butyl oleate, octyl oleate, methyl linolate, ethyl linolate, butyl linolate and octyl linolate. Preferred among these are alkyl stearates such as methyl stearate, ethyl stearate, butyl stearate and octyl stearate, with methyl stearate being more preferred. A fatty acid alkyl ester may be used alone, or two or more different ones may be used in combination.

A fatty acid glyceride is a compound having a structure obtained by dehydrating condensation of usually an approximately C10-22 fatty acid and glycerin. As fatty acid glycerides there may be mentioned fatty acid monoglycerides, fatty acid diglycerides and fatty acid triglycerides. As specific examples of fatty acid glycerides there may be mentioned saturated fatty acid glycerides such as laurylic acid monoglyceride, laurylic acid diglyceride, laurylic acid triglyceride, palmitic acid monoglyceride, palmitic acid diglyceride, palmitic acid triglyceride, stearic acid monoglyceride, stearic acid diglyceride, stearic acid triglyceride, behenic acid monoglyceride, behenic acid diglyceride and behenic acid triglyceride, and unsaturated fatty acid glycerides such as oleic acid monoglyceride, oleic acid diglyceride, oleic acid triglyceride, linolic acid monoglyceride, linolic acid diglyceride and linolic acid triglyceride. Preferred among these are stearic acid glycerides such as stearic acid monoglyceride, stearic acid diglyceride and stearic acid triglyceride, with stearic acid monoglyceride being more preferred. A fatty acid glyceride may be used alone, or two or more different ones may be used in combination.

The aliphatic alcohol is usually a C10-22 aliphatic alcohol, and may be either a monohydric alcohol or polyhydric alcohol. As specific examples of aliphatic alcohols there may be mentioned saturated aliphatic alcohols such as lauryl alcohol, palmityl alcohol, stearyl alcohol and behenyl alcohol, and unsaturated aliphatic alcohols such as oleyl alcohol and linoleyl alcohol. Stearyl alcohol is preferred among these. A fatty acid alcohol may be used alone, or two or more different ones may be used in combination.

The amount of fatty acid derivative and/or aliphatic alcohol used is not particularly restricted, but the content is preferably adjusted to be 0.01-1.0 part by weight with respect to 100 parts by weight of the polymer.

The methacrylic resin composition of the invention may also contain ultraviolet absorbers, light diffusion agents, antioxidants, coloring agents, heat stabilizers and the like if necessary, within ranges that do not affect the stringiness.

When a fatty acid derivative and/or aliphatic alcohol is used, the method for adding them to the methacrylic resin composition may be, for example, a method in which the polymer and a prescribed amount of the fatty acid derivative and/or aliphatic alcohol are placed in a single extruder or twin-screw extruder and mixed by hot melt kneading, a method in which the fatty acid derivative and/or aliphatic alcohol are combined during polymerization reaction of the monomer consisting mainly of methyl methacrylate, or a method in which the fatty acid derivative and/or aliphatic alcohol are attached to the pellet surfaces of the polymer and mixed together during molding.

A methacrylic resin composition according to the invention is obtained in the manner described above. When used in hot plate welding, even with a high hot plate temperature, the methacrylic resin composition is resistant to "stringing", a phenomenon in which the resin is drawn out into strings when the hot plate and the resin composition are pulled apart, and the resin composition is therefore excellent for use in hot plate welding.

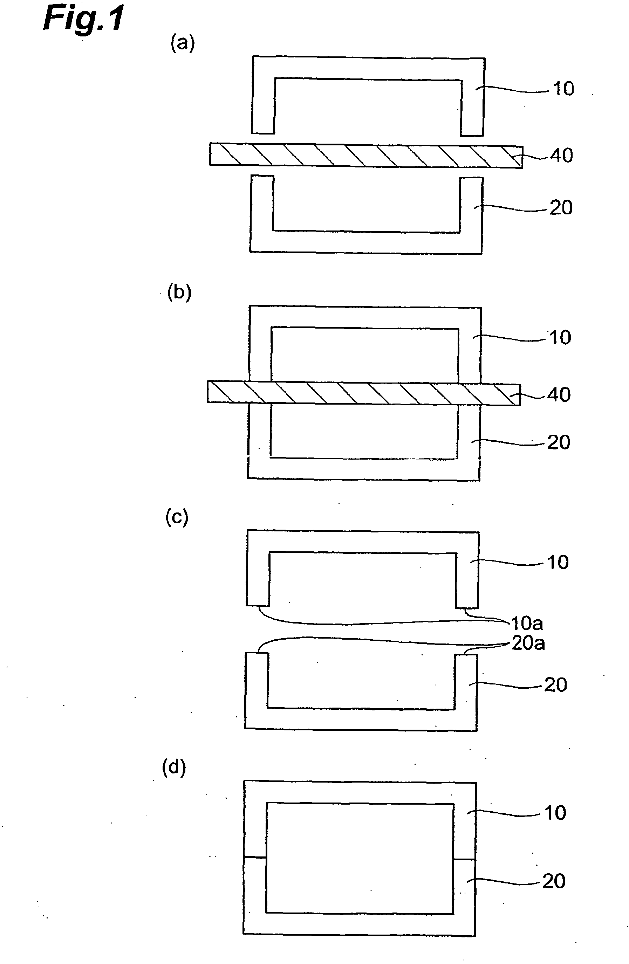

The welding method of the invention comprises a step in which at least a portion of a first member, formed from the aforementioned methacrylic resin composition, is contacted with a hot plate and melted, and a step in which the first member is separated from the hot plate and pressure-bonded with a second member. There are no particular restrictions on the material of the second member. The second member may also be formed using a methacrylic resin composition according to the invention. Fig. 1 is a process drawing for illustration of a welding method according to an embodiment of the invention. Here, a hot plate 40 is situated between a first member 10 and second member 20 (see (Fig. 1(a)) and at least portions of the first member 10 and second member 20 are contacted with the hot plate 40 to melt them (see (Fig. 1(b)), after which they are separated from the hot plate 40 (see (Fig. 1(c)) and molten sections 10a of the first member are pressure-bonded with molten sections 20a of the second member (see (Fig. 1(d)).

The methacrylic resin composition can be suitably applied as a starting material for vehicle members, and is particularly suitable as a starting material for vehicle members such as tail lamp covers, headlamp covers and meter panels.

[Examples]

The present invention will now be further explained by examples, with the understanding that the invention is not limited by the examples.

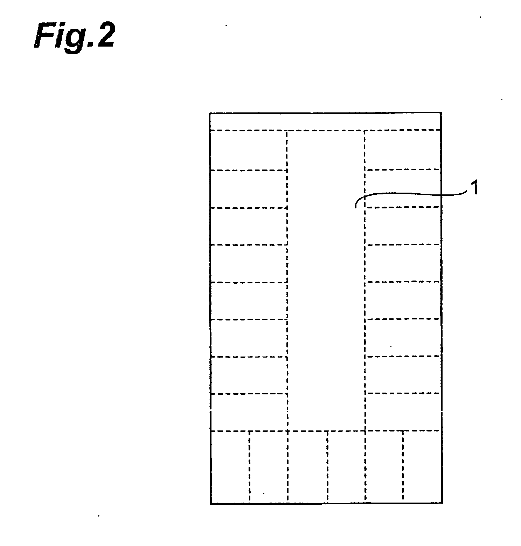

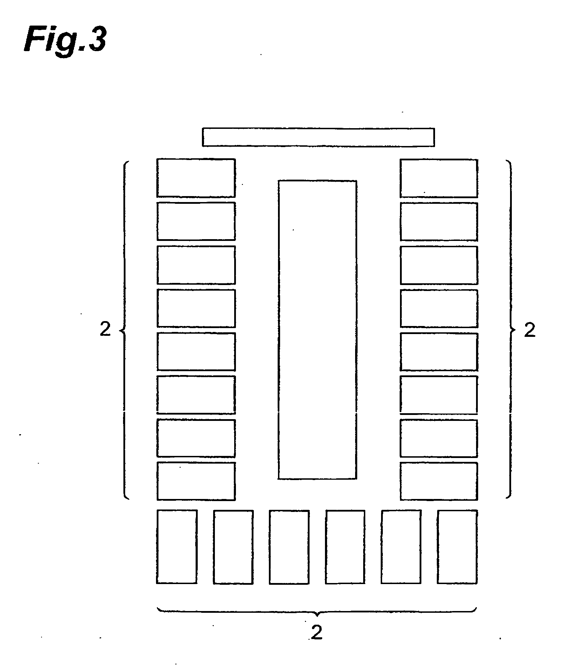

[Method of fabricating test pieces for stringiness evaluation test] A methacrylic resin composition for evaluation testing was used to fabricate a flat plate 1 with 210 mm length $\times$ 120 mm width $\times$ 3 mm thickness, with an injection molding machine (Model IS130II by Toshiba Corp.) at a forming temperature of 240°C and a mold temperature of 60°C (see Fig. 2). The flat plate 1 was then cut to 20 mm length $\times$ 40 mm width $\times$ 3 mm thickness as shown in Fig. 3 using a panel saw, to form a total of 22 test pieces 2. Fig. 2 is a schematic drawing showing the flat plate 1 from above before cutting, and Fig. 3 is a schematic drawing showing the separate test pieces 2 from above after cutting.

[Test method of evaluating the stringiness]

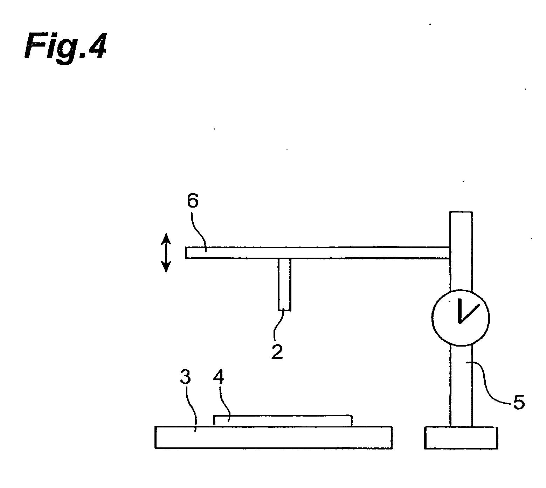

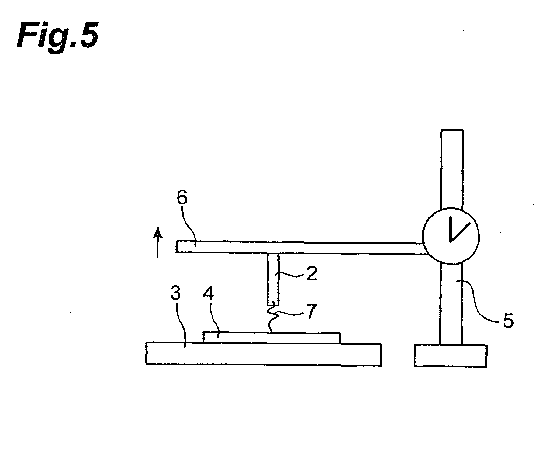

A method of evaluating the stringiness of the methacrylic resin composition will now be explained with reference to Fig. 4 and Fig. 5. Fig. 4 is a schematic drawing showing an example of the stringiness evaluation test before start of the evaluation test, and Fig. 5 is a schematic drawing showing an example of the stringiness evaluation test where a methacrylic resin composition test piece has a drawn-out string.

A SUS34 plate with 15 cm length $\times$ 15 cm width $\times$ 3 mm thickness was laid on a surface of the hot plate 3 as shown in Fig. 4, and used as the hot platen 4. Separately, an aluminum rod 6 was inserted in a height gage 5 having an adjustable height, and a methacrylic resin composition test piece 2 with 20 mm length $\times$ 40 mm width $\times$ 3 mm height obtained by the fabrication method described above was affixed to the aluminum rod 6 with a clip.

Next, the side (20 mm $\times$ 3 mm) of the test piece 2 which had not been cut with the panel saw during fabrication of the test piece was pressed for 20 seconds against the hot platen 4 that had been heated to a prescribed temperature, and after melting the contacted section of the test piece 2, the test piece 2 was raised up as shown in Fig. 5 and the length of the drawn string 7 was read from the scale of the height gage 5. This procedure was repeated 10 times, and the average value for the length of the drawn string at a given temperature was calculated. The temperature at which the average value was 5 cm was recorded as the initial string drawing temperature.

[Measurement of viscosity-average molecular weight]

The viscosity-average molecular weight of the polymer was determined by measuring the limiting viscosity in a 0.1 % chloroform solution at 25°C using an Ubbelohde viscometer according to the method of ISO-1628-6, and performing calculation by formula (1) above.

Example 1

(a) Production of polymer by polymerization of methyl methacrylate and methyl acrylate.

Into a polymerization reactor equipped with a stirrer there were continuously supplied a mixture of 97 parts by weight of methyl methacrylate and 3 parts by weight of methyl acrylate, with 0.016 part by weight of 1,1-di(t-butylperoxy)cyclohexane and 0.09 part by weight of n-octylmercaptane, and polymerization reaction was conducted at 175°C for a mean residence time of 40 minutes. Next, after preheating the reaction mixture (partial polymer) exiting from the polymerization reactor, it was supplied to a volatilizing extruder and the unreacted monomer component was gasified and recovered while obtaining pellet-like polymer.

(b) Evaluation of methacrylic resin composition for hot plate welding

The polymer obtained in Example 1(a) was used as a methacrylic resin composition for hot plate welding to fabricate a test piece by the method described above, and the test piece was evaluated by the evaluation test method also described above. The results are shown in Table 1.

Example 2

(a) Production of polymer by polymerization of methyl methacrylate and methyl acrylate.

Pellet-like polymer was obtained by the same procedure as Example 1(a).

(b) Production of methacrylic resin composition for hot plate welding

After mixing 100 parts by weight of the polymer obtained in Example 2(a) with 0.1 part by weight of ethylenebisstearic acid amide using a tumbler, the mixture was supplied to an extruder with a screw diameter of 40 mm for melt kneading to obtain a methacrylic resin composition for hot plate welding.

(c) Evaluation of methacrylic resin composition for hot plate welding

The methacrylic resin composition obtained in Example 2(b) was used to fabricate a test piece by the method described above, and the test piece was evaluated by the evaluation test method also described above. The results are shown in Table 1.

Example 3

The same procedure was followed as in Example 2, except that the amount of ethylenebisstearic acid amide used was changed from 0.1 part by weight to 0.2 part by weight. The results are shown in Table 1.

Example 4

The same procedure was followed as in Example 2, except that the amount of ethylenebisstearic acid amide used was changed from 0.1 part by weight to 0.3 part by weight. The results are shown in Table 1.

Example 5

(a) Production of methacrylic resin composition for hot plate welding

Polymerization reaction was conducted by the same procedure as Example 1(a). After then preheating the reaction mixture (partial polymer) exiting from the polymerization reactor, it was supplied to a volatilizing extruder for gasification and recovery of the unreacted monomer component, and then 0.1 part by weight of stearyl alcohol that had been melted at the tip of the extruder was added through a metering pump to obtain a pellet-like methacrylic resin composition for hot plate welding.

(b) Evaluation of methacrylic resin composition for hot plate welding

The methacrylic resin composition obtained in Example 5(a) was used to fabricate a test piece by the method described above, and the test piece was evaluated by the evaluation test method also described above. The results are shown in Table 1.

Comparative Example 1

(a) Production of polymer by polymerization of methyl methacrylate and methyl acrylate.

Into a polymerization reactor equipped with a stirrer there were continuously supplied a mixture of 99 parts by weight of methyl methacrylate and 1 part by weight of methyl acrylate, with 0.016 part by weight of 1,1-di(t-butylperoxy)cyclohexane and 0.17 part by weight of n-octylmercaptane, and polymerization reaction was conducted at 175°C for a mean residence time of 40 minutes. Next, after preheating the reaction mixture (partial polymer) exiting from the polymerization reactor, it was supplied to a volatilizing extruder and the unreacted monomer component was gasified and recovered while obtaining pellet-like polymer.

(b) Evaluation of methacrylic resin composition for hot plate welding

The polymer obtained in Comparative Example 1(a) was used as a methacrylic resin composition for hot plate welding to fabricate a test piece by the method described above, and the test piece was evaluated by the evaluation test method also described above. The results are shown in Table 1.

[Table 1]

| | Polymer | | Additive and its amount (part by wt.) | Initial string drawing temperature (°C) |
|---|---|---|---|---|
| | Limiting viscosity | Viscosity-average molecular weight | | |
| Example 1 | 0.747 | 174000 | - | 260 |
| Example 2 | 0.747 | 174000 | Ethylenebisstearic acid amide 0.1 part by wt. | 290 |
| Example 3 | 0.747 | 174000 | Ethylenebisstearic acid amide 0.2 part by wt. | 290 |
| Example 4 | 0.747 | 174000 | Ethylenebisstearic acid amide 0.3 part by wt. | 290 |
| Example 5 | 0.747 | 174000 | Stearyl alcohol 0.1 part by wt. | 270 |
| Comp. Ex. 1 | 0.539 | 115000 | - | 230 |

**Reference Sings List**

1: Flat plate obtained by injection molding of methacrylic resin composition, 2: methacrylic resin composition test piece, 3: hot plate, 4: hot platen, 5: height gage, 6: aluminum rod, 7: portion of stringy resin composition produced between methacrylic resin composition and hot plate, 10: first member, 10a: melted section of first member, 20: second member, 20a: melted section of second member, 40: hot plate.

**Claims**

1.  Use of a methacrylic resin composition for hot plate welding, wherein the methacrylic resin composition contains a polymer obtainable by polymerization of monomers consisting mainly of methyl methacrylate, and the polymer has a viscosity-average molecular weight of 150000-250000.

2.  The use according to claim 1, wherein the polymer is obtainable by polymerization of 85-100 parts by weight of methyl methacrylate and 0-15 parts by weight of an acrylic acid ester.

3.  The use according to claim 1 or 2, wherein the methacrylic resin composition further contains a fatty acid derivative and/or an aliphatic alcohol.

4.  The use according to claim 3, wherein the content of the fatty acid derivative and/or aliphatic alcohol is 0.01-1.0 part by weight with respect to 100 parts by weight of the polymer.

5.  The use according to any one of claims 1 to 4, wherein the methacrylic resin composition is used as a starting material for a vehicle member.

6.  The use according to claim 5, wherein the vehicle member is at least one type selected from among tail lamp covers, headlamp covers and meter panels.

7.  A welding method comprising:

    a step in which at least a portion of a first member, formed from a methacrylic resin composition that contains a polymer obtainable by polymerization of monomers consisting mainly of methyl methacrylate, the viscosity-average molecular weight of the polymer is 150000-250000, is contacted with a hot plate and melted, and
    a step in which the first member is separated from the hot plate and pressure-bonded with a second member.

8.  The welding method according to claim 7, wherein the polymer is obtainable by polymerization of 85-100 parts by weight of methyl methacrylate and 0-15 parts by weight of an acrylic acid ester.

9.  The welding method according to claim 7 or 8, wherein the methacrylic resin composition further contains a fatty acid derivative and/or an aliphatic alcohol.

10. The welding method according to claim 9, wherein the content of the fatty acid derivative and/or aliphatic alcohol is 0.01-1.0 part by weight with respect to 100 parts by weight of the polymer.

11. The welding method according to any one of claims 7 to 10, wherein the methacrylic resin composition is used as a starting material for a vehicle member.

12. The welding method according to claim 11, wherein the vehicle member is at least one type selected from among tail lamp covers, headlamp covers and meter panels.

**Patentansprüche**

1.  Verwendung einer Methacrylharzzusammensetzung zum Heizelementschweißen, wobei die Methacrylharzzusammensetzung ein Polymer enthält, das durch Polymerisation von Monomeren, die hauptsächlich aus Methylmethacrylat bestehen, erhältlich ist und das Polymer ein Viskositätsmittel des Molekulargewichts von 150000-250000 hat.

2.  Die Verwendung nach Anspruch 1, wobei das Polymer durch Polymerisation von 85-100 Gewichtsteilen Methylmethacrylat und 0-15 Gewichtsteilen eines Acrylsäureesters erhältlich ist.

3.  Die Verwendung nach Anspruch 1 oder 2, wobei die Methacrylharzzusammensetzung weiter ein Fettsäurederivat und/oder einen aliphatischen Alkohol enthält.

4.  Die Verwendung nach Anspruch 3, wobei der Gehalt des Fettsäurederivats und/oder des aliphatischen Alkohols 0,01-1,0 Gewichtsteil, bezogen auf 100 Gewichtsteile des Polymers, beträgt.

5.  Die Verwendung nach einem der Ansprüche 1 bis 4, wobei die Methacrylharzzusammensetzung als Ausgangsmaterial für ein Fahrzeugelement verwendet wird.

6.  Verwendung nach Anspruch 5, wobei das Fahrzeugelement wenigstens eine Ausführung, ausgewählt aus Rückleuchtenabdeckungen, Frontleuchtenabdeckungen und Instrumententafeln, ist.

7.  Ein Schweißverfahren, umfassend:

einen Schritt, in dem wenigstens ein Teil eines ersten Elements, gebildet aus einer Methacrylharzzusammensetzung, die ein Polymer enthält, das durch Polymerisation von Monomeren, die hauptsächlich aus Methylmethacrylat bestehen, erhältlich ist, wobei das Viskositätsmittel des Molekulargewichts des Polymers 150000-250000 beträgt, mit einem Heizelement in Kontakt gebracht und geschmolzen wird, und

einen Schritt, in dem das erste Element von dem Heizelement getrennt wird und mit einem zweiten Element druckverbunden wird.

8. Das Schweißverfahren nach Anspruch 7, wobei das Polymer durch Polymerisation von 85-100 Gewichtsteilen Methylmethacrylat und 0-15 Gewichtsteilen eines Acrylsäureesters erhältlich ist.

9. Das Schweißverfahren nach Anspruch 7 oder 8, wobei die Methacrylharzzusammensetzung weiter ein Fettsäurederivat und/oder einen aliphatischen Alkohol enthält.

10. Das Schweißverfahren nach Anspruch 9, wobei der Gehalt des Fettsäurederivats und/oder des aliphatischen Alkohols 0,01-1,0 Gewichtsteil, bezogen auf 100 Gewichtsteile des Polymers, beträgt.

11. Das Schweißverfahren nach einem der Ansprüche 7 bis 10, wobei die Methacrylharzzusammensetzung als Ausgangsmaterial für ein Fahrzeugelement verwendet wird.

12. Das Schweißverfahren nach Anspruch 11, wobei das Fahrzeugelement wenigstens eine Ausführung, ausgewählt aus Rückleuchtenabdeckungen, Frontleuchtenabdeckungen und Instrumententafeln, ist.


**Revendications**

1. Utilisation d'une composition de résine méthacrylique pour soudage par plaque chauffante, dans laquelle la composition de résine méthacrylique contient un polymère pouvant être obtenu par polymérisation de monomères se composant principalement de méthacrylate de méthyle, et le polymère a un poids moléculaire moyen en viscosité de 150 000 à 250 000.

2. Utilisation selon la revendication 1, dans laquelle le polymère peut être obtenu par polymérisation de 85 à 100 parties en poids de méthacrylate de méthyle et de 0 à 15 parties en poids d'un ester d'acide acrylique.

3. Utilisation selon la revendication 1 ou 2, dans laquelle la composition de résine méthacrylique contient en outre un dérivé d'acide gras et/ou un alcool aliphatique.

4. Utilisation selon la revendication 3, dans laquelle la teneur en dérivé d'acide gras et/ou alcool aliphatique est de 0,01 à 1,0 partie en poids par rapport à 100 parties en poids du polymère.

5. Utilisation selon l'une quelconque des revendications 1 à 4, dans laquelle la composition de résine méthacrylique est utilisée comme matière première pour un élément de véhicule.

6. Utilisation selon la revendication 5, dans laquelle l'élément de véhicule est au moins un type choisi parmi des caches de feu arrière, des caches de phare et des tableaux de bord.

7. Méthode de soudage comprenant :

une étape dans laquelle au moins une partie d'un premier élément, formé à partir d'une composition de résine méthacrylique qui contient un polymère pouvant être obtenu par polymérisation de monomères se composant principalement de méthacrylate de méthyle, le poids moléculaire moyen en viscosité du polymère étant de 150 000 à 250 000, est mise en contact avec une plaque chauffante et fondue, et
une étape dans laquelle le premier élément est séparé de la plaque chauffante et attaché par pression à un second élément.

8. Méthode de soudage selon la revendication 7, dans laquelle le polymère peut être obtenu par polymérisation de 85 à 100 parties en poids de méthacrylate de méthyle et de 0 à 15 parties en poids d'un ester d'acide acrylique.

9. Méthode de soudage selon la revendication 7 ou 8, dans laquelle la composition de résine méthacrylique comprend en outre un dérivé d'acide gras et/ou un alcool aliphatique.

10. Méthode de soudage selon la revendication 9, dans laquelle la teneur en dérivé d'acide gras et/ou alcool aliphatique est de 0,01 à 1,0 partie en poids par rapport à 100 parties en poids du polymère.

11. Méthode de soudage selon l'une quelconque des revendications 7 à 10, dans laquelle la composition de résine méthacrylique est utilisée comme matière première pour un élément de véhicule.

12. Méthode de soudage selon la revendication 11, dans laquelle l'élément de véhicule est au moins un type choisi parmi des caches de feu arrière, des caches de phare et des tableaux de bord.

# Fig.1

(a)

(b)

(c)

(d)

# Fig.2

# Fig.3

# Fig.4

# Fig.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H05311025 A
- JP H05247311 A
- JP H05279537 A
- JP H0641385 A
- JP H0641386 A

- JP H06184389 A
- JP H06184390 A
- JP H06240093 A
- JP H01294763 A
- JP 2005239823 A